# EUROPÄISCHE PATENTSCHRIFT

(11) **EP 3 028 332 B1**
(45) Veröffentlichungstag und Bekanntmachung des Hinweises auf die Patenterteilung: **04.10.2017**
(21) Anmeldenummer: 14745067.0
(22) Anmeldetag: 05.07.2014
(51) Int. Cl.: G01N 23/201, G01N 23/202, H01M 8/1027, H01M 8/103, H01M 8/1048, H01M 8/1067, H01M 8/1069

(54) **MATERIALPRÜFUNG VON MEMBRANEN FÜR POLYMERELEKTROLYTBRENNSTOFFZELLEN**
TESTING OF MATERIALS FOR MEMBRANES FOR POLYMER ELECTROLYTE FUEL CELLS
CONTRÔLE DE MATÉRIAUX DE MEMBRANES POUR PILES À COMBUSTIBLES À ÉLECTROLYTES POLYMÈRES

(30) Priorität: 02.08.2013 DE 102013013006; 18.01.2014 DE 102014000630
(43) Veröffentlichungstag der Anmeldung: 08.06.2016
(73) Patentinhaber: Forschungszentrum Jülich GmbH, 52425 Jülich (DE)
(72) Erfinder: HOLDERER, Olaf, 82110 Germering (DE); IVANOVA, Oxana, 85375 Neufahrn (DE); ZORN, Reiner, 50668 Köln (DE); PYCKHOUT-HINTZEN, Wim, 52445 Titz (DE); LEHNERT, Werner, 52351 Düren (DE); Lüke, Wiebke, 52070 Aachen (DE); MONKENBUSCH, Michael, 52428 Jülich (DE); SZEKELY, Noemi, 85375 Neufahrn (DE)
(86) Internationale Anmeldenummer: PCT/DE2014/000340
(87) Internationale Veröffentlichungsnummer: WO 2015/014334

(56) Entgegenhaltungen:
- US-A1- 2004 086 763
- US-A1- 2004 127 588

## Beschreibung

Die Erfindung betrifft ein Verfahren zur Materialprüfung von Polymermembranen für den Einsatz als protonenleitende Membran in einer Brennstoffzelle mit dem Ziel, eine Langzeitstabilität der Membran vorherzusagen.

### Stand der Technik

Eine Polymerelektrolytbrennstoffzelle umfasst eine Anode und eine Kathode, die durch eine protonenleitende Polymermembran voneinander getrennt sind. Im Temperaturbereich bis ca. 90 °C kommen meist PFSA (Perfluorosulfonic Acid) Membranen zum Einsatz. Ein typischer Vertreter dieser Materialklasse ist Nafion.

Im höheren Temperaturbereich zwischen 120°C und 200°C werden typischerweise hochtemperaturstabile Polybenzimidazole (PBI) verwendet. Geeignete Vertreter dieser Klasse sind beispielsweise ABPBI = Poly(2,5-Benzimidazol) oder PBI = Poly (2'2-(m-Phenylen)-5'5-Bibenzimidazol). Diese werden typischerweise mit Phosphorsäure beladen, um die geforderte protonische Leitfähigkeit sicherzustellen.

Diese Brennstoffzellen werden als Hochtemperatur-Polymerelektrolytbrennstoffzellen (HT-PEFCs) bezeichnet.

Die Eigenschaften der Polymere ändern sich sowohl in Bezug auf die protonische Leitfähigkeit als auch die mechanischen Eigenschaften als Funktion der Säurebeladung. Diese Eigenschaften dominieren das Leistungsverhalten und die Lebensdauer der Brennstoffzellen. Von zwei nominell identisch gefertigten Chargen ein und desselben Membranmaterials kann die eine für den Einsatz in der Brennstoffzelle sehr gut brauchbar und die andere völlig unbrauchbar sein. Damit ist die Herstellung der Brennstoffzelle insgesamt nur schlecht reproduzierbar.

### Aufgabe und Lösung

Es ist daher die Aufgabe der Erfindung, ein Verfahren zur Verfügung zu stellen, mit dem Polymermembranen vor dem Einsatz in der Brennstoffzelle auf ihre Tauglichkeit überprüft werden können.

Polymermembranen zur Verfügung zu stellen, das einen größeren Anteil an für den Einsatz in der Brennstoffzelle tauglichen Membranen liefert als die bisherigen Herstellungsverfahren. Diese Aufgabe wird erfindungsgemäß gelöst durch ein Materialprüfungsverfahren gemäß Hauptanspruch 1. Weitere vorteilhafte Ausgestaltungen ergeben sich jeweils aus den darauf rückbezogenen Unteransprüchen.

### Gegenstand der Erfindung

Im Rahmen der Erfindung wurde ein Verfahren zur Materialprüfung einer Polymermembran für den Einsatz als protonenleitende Membran in einer Brennstoffzelle entwickelt.

Erfindungsgemäß wird die Membran auf das Vorhandensein von selbstähnlichen Domänen von Polymerketten untersucht und als tauglich für den Einsatz in der Brennstoffzelle gewertet, wenn derartige Domänen vorhanden sind. Selbstähnlichkeit bedeutet, dass die Domänen bei einer Änderung der Vergrößerung, unter der sie betrachtet werden, dieselben oder ähnliche Strukturen aufweisen wie vor der Vergrößerungsänderung. Die Strukturen sind also in sich selbst verschachtelt und kehren bei der Vergrößerungsänderung wieder.

Es wurde erkannt, dass diese Domänen ein Marker dafür sind, wie effektiv die Polymerketten miteinander vernetzt sind. Gerade beim Betrieb der Membran in einem sauren Milieu hängt ihre Stabilität von dieser Vernetzung ab. In einem sauren Milieu haben die einzelnen Polymerketten die Tendenz, sich so weit wie möglich voneinander zu entfernen. Wenn die Vernetzung der Polymerketten dem keine Grenze setzt, geht die Membran in dem sauren Milieu in Lösung.

Daher sind mit Säure beladene Polymermembranen, die die beanspruchte Struktur aufweisen, auch bei hohen Temperaturen und in saurer Umgebung mechanisch deutlich stabiler als Polymermembranen, die diese Struktur nicht aufweisen.

Die Domänen können insbesondere fraktale Domänen sein. Sie bestehen dann aus verkleinerten Kopien ihrer selbst. Vorteilhaft wird also die Membran auf das Vorhandensein fraktaler Domänen von Polymerketten untersucht und als tauglich für den Einsatz in der Brennstoffzelle gewertet, wenn derartige Domänen vorhanden sind.

Die fraktale Dimension fdim gibt an, wie diese Kopien den Raum ausfüllen: Ist fdim nahe oder gleich 2, füllen die unendlich vielen Kopien der Struktur im Raum eine Fläche. Ist fdim nahe oder gleich 3, füllen sie den ganzen Raum volumenmäßig aus. fdim gibt also an, ob die selbstähnliche Struktur von flächiger oder von räumlicher Natur ist. Ist fdim größer als 2, hat die Struktur zumindest einen räumlichen Anteil, was wiederum zeigt, dass die für die Stabilität der Membran vorteilhafte Vernetzung der Polymerdomänen ein räumlicher Prozess innerhalb der Membran ist. In einer besonders vorteilhaften Ausgestaltung der Erfindung wird daher die fraktale Dimension fdim der Domänen bestimmt, und die Membran wird als tauglich für den Einsatz in der Brennstoffzelle gewertet, wenn fdim zwischen 2 und 3 liegt.

Vorteilhaft handelt es sich bei mindestens einem Teil der fraktalen Domänen, bevorzugt bei im Wesentlichen allen Polymerdomänen, um Massenfraktale. Massenfraktale sind im Unterschied zu Oberflächenfraktalen Strukturen, die ein aus Verzweigungen und Querverbindungen gebildetes dreidimensionales Netzwerk enthalten.

Vorteilhaft wird die Membran auf das Vorhandensein von Domänen von Polymerketten untersucht, die in mindestens einer Dimension eine laterale Ausdehnung zwischen 1 nm und 2000 nm aufweisen. Sind diese Domänen vorhanden, wird die Membran als tauglich für den Einsatz in der Brennstoffzelle gewertet.

In einer besonders vorteilhaften Ausgestaltung der Erfindung wird die Membran auf das Vorhandensein von Domänen von Polymerketten untersucht, die in mindestens einer Dimension eine laterale Ausdehnung zwischen 1 nm und 50 nm aufweisen. Sind diese Domänen vorhanden, wird die Membran als tauglich für den Einsatz in der Brennstoffzelle gewertet. In den Versuchen der Erfinder war die Korrelation zwischen dem Vorhandensein der Domänen und dem Funktionieren der Membran in der Brennstoffzelle besonders ausgeprägt, wenn Strukturen mit einer Ausdehnung zwischen 1 nm und 50 nm betrachtet wurden. Fraktale Strukturen bestehen aus verkleinerten Kopien ihrer selbst und weisen daher unabhängig vom Betrachtungsmaßstab eine beliebig kleine Feinstruktur auf. Eine physikalische Grenze für die Feinstruktur der Domänen von Polymerketten wird lediglich durch die Größe der Polymersegmente gesetzt, aus denen die Polymerketten zusammengesetzt sind. Das Vorhandensein von Strukturen mit einer Ausdehnung zwischen 1 nm und 50 nm spricht mit hoher Wahrscheinlichkeit dafür, dass es sich um fraktale Strukturen handelt.

Vorteilhaft wird die Membran mit Transmissionselektronenmikroskopie oder Rastersondenmikroskopie untersucht, und es wird aus den erhaltenen Bildern ausgewertet, ob die Domänen vorhanden sind. Diese Techniken besitzen zum Einen eine hinreichende Ortsauflösung unterhalb der Beugungsgrenze der klassischen Lichtmikroskopie und liefern zum Anderen die Strukturinformation in unmittelbar interpretierbarer Form im Ortsraum. Beispielsweise kann die Membran mit Rasterkraftmikroskopie (AFM) untersucht werden, wenn die Domänenstruktur sich in einem Härteunterschied des Membranmaterials manifestiert. Als Transmissionselektronenmikroskop ist insbesondere ein Cryo-Transmissionselektronenmikroskop geeignet.

Es kann technisch anspruchsvoll sein, die Membran mit derartigen Methoden unter genau den gleichen Bedingungen zu untersuchen, die auch beim späteren Einsatz der Membran in einer Brennstoffzelle herrschen. Phosphorsäure etwa, mit der PFSA-Membranen dotiert sind, ist sehr stark ätzend. Wird die Membran im nicht dotierten Zustand untersucht, besteht ein Restrisiko, dass die zunächst vorhandenen Strukturen der späteren Beladung mit Phosphorsäure nicht standhalten, so dass die Membran fälschlicherweise als tauglich gewertet wird.

Daher wird in einer besonders vorteilhaften Ausgestaltung der Erfindung die Membran mit Neutronen- oder Röntgenstrahlung bestrahlt und die Intensität I(Q) der gestreuten Strahlung als Funktion des Wellenvektors Q gemessen. Vorteilhaft wird hierbei Neutronen- oder Röntgenstrahlung mit einer Wellenlänge zwischen 1 und 20 Å gewählt. Neutronenstrahlung hat dabei vorteilhaft eine Wellenlänge zwischen 2 und 20 Å. Die Neutronen können beispielsweise thermische oder kalte Neutronen sein. Röntgenstrahlung kann vorteilhaft aus einer Cu-Ka Quelle mit λ =1.54 Å bezogen werden.

Vorteilhaft wird die Intensität der gestreuten Strahlung wird mindestens für einen Wellenvektor zwischen 0.1 und 0.15 Å⁻¹ sowie mindestens für einen weiteren Wellenvektor unterhalb dieses Bereiches gemessen. Dabei hängt der Wellenvektor q mit dem Streuwinkel θ durch die Bragg-Bedingung q=4π/λ * sin(θ/2) zusammen.

Dabei wird die Membran vorteilhaft als tauglich für den Einsatz in der Brennstoffzelle gewertet, wenn sich die beiden gemessenen Intensitäten um mindestens einen Faktor 5 und/oder mindestens um einen Faktor 5 pro 0.05 Å⁻¹ Differenz zwischen den beiden Wellenvektoren unterscheiden; andernfalls wird sie als untauglich gewertet. In den Versuchen der Erfinder hat sich gezeigt, dass der weitaus überwiegende Anteil der Membranen, der dieses Kriterium erfüllt, selbstähnliche bzw. fraktale Domänen aufweist. Diese grobe Unterscheidung an Hand nur zweier Messpunkte ist daher ein Schnelltest, der mit geringem Aufwand an Messzeit das Gros der untauglichen Membranen aussondert. Die Membranen, die diesen Schnelltest bestehen, können anschließend detaillierter untersucht werden.

Vorteilhaft wird die Intensität der unter einem Winkel von bis zu θ=15 Grad gestreuten Strahlung gemessen (Kleinwinkelstreuung).

Es wurde erkannt, dass die vorteilhaften Strukturen mit dem Verhalten der Polymermembran unter Kleinwinkelstreuung von Neutronen- oder Röntgenstrahlung korreliert sind. Der Vorteil dieser Untersuchung ist, dass sie keine spezielle Präparation der Membran erfordert. Die Membran kann unter genau den gleichen Bedingungen untersucht werden, die beim späteren Einsatz in der Brennstoffzelle herrschen. Insbesondere kann sie in einem sauren Milieu untersucht werden, um nur solche Strukturen zu erfassen, die diesem Milieu standhalten. In praktischen Versuchen der Erfinder hielten Membranen, die das beanspruchte Verhalten zeigten, einer hohen Beladung mit Phosphorsäure bei Temperaturen um 160 °C stand. Membranen, die dieses Verhalten in der Kleinwinkelstreuung nicht zeigten, lösten sich dagegen auf.

Indem die Membran erfindungsgemäß bereits vor dem Einsatz in der Brennstoffzelle auf ihre Tauglichkeit überprüft werden kann, wird die Reproduzierbarkeit der Herstellung von Polymerelektrolytbrennstoffzellen insgesamt gesteigert.

Mit Neutronen- oder Röntgenstreuung lässt sich die Membran insbesondere daraufhin untersuchen, ob Domänen mit einer bestimmten lateralen Ausdehnung in mindestens einer Dimension vorhanden sind oder ob diese selbstähnlich sind. Insbesondere macht die Kleinwinkelstreuung die fraktale Dimension fdim von Domänen einer direkten Messung zugänglich. In einer doppelt logarithmischen Auftragung der Streuintensität I(Q) über dem Wellenvektor Q steigt die Streuintensität I(Q) für kleine, gegen Null gehende Wellenvektoren Q linear an mit Steigung fdim.

Weiterhin lässt sich die Membran mit Neutronen- oder Röntgenstreuung sowohl vor als auch während und nach der Beladung mit Phosphorsäure untersuchen. Auf diese Weise kann diagnostiziert werden, ob und ggfs. zu welchem Zeitpunkt eine zunächst vorhandene Domänenstruktur durch den Beladungsprozess verschlechtert oder zerstört wird.

Aus der Erkenntnis der Erfinder, dass das Vorhandensein von Strukturen in den Membranen mit ihrer Eignung für den Einsatz in der Brennstoffzelle korreliert ist, lässt sich für die Herstellung von Membranen für diesen Einsatzzweck die Handlungsanweisung ableiten, diese Strukturen gezielt einzubringen. Daher bezieht sich die Erfindung auch auf ein Verfahren zur Herstellung einer Polymermembran für den Einsatz in einer Brennstoffzelle. Bei diesem Verfahren werden in die Membran Strukturen eingebracht, bei deren Vorhandensein sie gemäß dem Verfahren zur Materialprüfung als tauglich für den Einsatz in der Brennstoffzelle gewertet wird.

Auf diese Weise ist der Anteil an für den Einsatz in der Brennstoffzelle brauchbaren Membranen, die das Verfahren liefert, gegenüber Herstellungsverfahren nach dem bisherigen Stand der Technik vorteilhaft erhöht. Damit ist die Ausschussrate deutlich vermindert.

Vorteilhaft ist die Polymermembran auf Grund einer Dotierung mit einem flüssigen Elektrolyten protonenleitend. Dabei kann der Elektrolyt ein saurer Elektrolyt und hier insbesondere Phosphorsäure sein. Wird die Membran in diesem sauren Milieu geprüft, in dem sie sich auch beim späteren Einsatz in der Brennstoffzelle befinden wird, so fördert diese Prüfung nur Strukturen zu Tage, die diesem Milieu standhalten.

Aus dem gleichen Grund wird das Prüfungsverfahren vorteilhaft bei einer Temperatur zwischen 100 °C und 250 °C, bevorzugt zwischen 120 °C und 200 °C, durchgeführt. Dies entspricht dem Bereich der Betriebstemperaturen, für die Polymerelektrolytbrennstoffzellen typischerweise ausgelegt sind. In diesem Temperaturbereich weist die Membran eine optimale Protonenleitfähigkeit auf.

Vorteilhaft gehört das Polymer der Membran zur Familie der Polybenzimidazole. Geeignete Vertreter dieser Klasse sind beispielsweise ABPBI = Poly(2,5-Benzimidazol) oder PBI = Poly (2'2-(m-Phenylen)-5'5-Bibenzimidazol).

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
- Figur 1:: Messung der Kleinwinkelstreuung an einer strukturierten Membran, die für den Einsatz in der Brennstoffzelle tauglich ist, mit dem J-NSE Instrument.
- Figur 2:: Messung der Kleinwinkelstreuung in einer zur in Figur 1 nominell identischen, aber anders hergestellten und daher unstrukturierten Membran.
- Figur 3:: Erneute Vermessung der in Figur 1 charakterisierten Membran bei einer Temperatur von 150 °C mit dem KWS-2 bis hin zu noch kleineren Streuvektoren.
- Figur 4:: SAXS-Messungen an weiteren Membranen vor der Beladung mit Phosphorsäure.

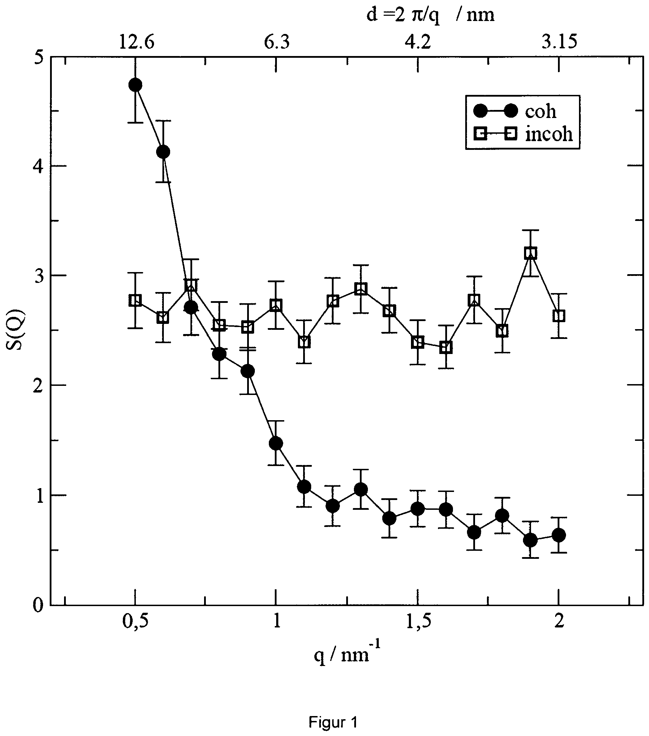

Figur 1 zeigt Messergebnisse eines am J-NSE Instrument am FRM II Forschungsreaktor in Garching durchgeführten Kleinwinkelstreuexperiments an einer phosphorsäuredotierten PBI-Membran. Aufgetragen ist jeweils die Streuintensität S(Q) über dem Betrag des Wellenvektors (Streuvektors) q. Die Messung wurde mit Polarisationsanalyse durchgeführt, so dass die inkohärente Streuung an Protonen ("incoh", Messpunkte durch hohle Quadrate symbolisiert) und die kohärente Streuung an den interessierenden Strukturen im nm-Bereich ("coh", Messpunkte durch ausgefüllte Kreise symbolisiert) voneinander unterscheidbar sind. Der Anstieg zu kleinen Wellenvektoren q (entspricht großen Längenskalen d mit d=2π/q im Realraum, siehe obere waagerechte Skala) zeigt eindeutig eine Strukturierung auf einer Längenskala > 1 nm. Diese Membran hat sich beim Einsatz in der Brennstoffzelle bei einer Betriebstemperatur um 160 °C und hoher Beladung mit Phosphorsäure als tauglich und stabil erwiesen.

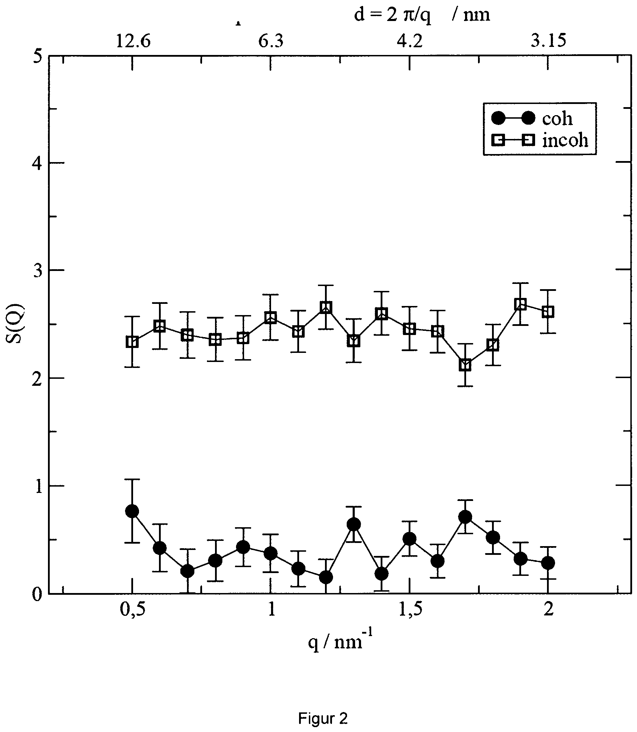

Figur 2 zeigt Messergebnisse, die mit der gleichen Apparatur an einer nach dem nominell gleichen Prozess hergestellten und damit nominell zu der in Figur 1 identischen, aber aus einer anderen Produktionscharge stammenden PBI-Membran aufgenommen wurden. Die inkohärente Streuung an Protonen zeigt durchweg die gleiche Intensität wie in Figur 1, woraus sich ablesen lässt, dass die Schichtdicken gleich sind. Die kohärente Streuintensität verschwindet und zeigt daher auch keinen Anstieg zu kleinen Wellenvektoren (Streuvektoren) q; somit fehlt jegliche Struktur auf der Längenskala > 1 nm. Diese Membran wurde dem gleichen Test in einer Brennstoffzelle unterzogen wie die in Figur 1 charakterisierte Membran. Sie löste sich bei diesem Test auf.

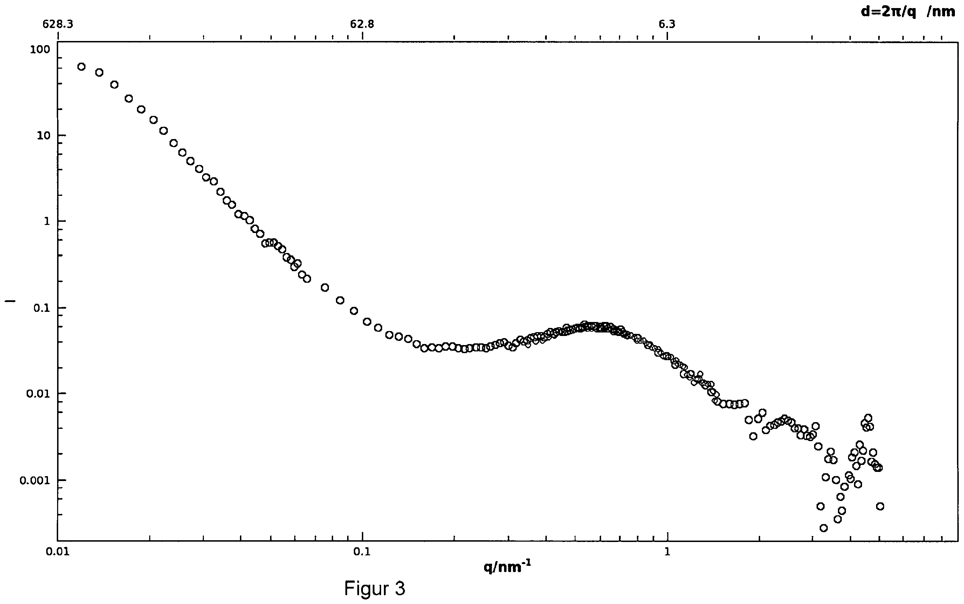

Figur 3 zeigt weitere Messergebnisse, die mit der KWS-2 Kleinwinkelstreuanlage am FRM II an der bereits in Figur 1 charakterisierten Membran aufgenommen wurden. Aufgetragen ist die Streuintensität I in absoluten Einheiten über dem Wellenvektor (Streuvektor) q. Mit der KWS-2 Anlage sind Messungen bis hin zu deutlich kleineren Wellenvektoren q möglich, die Strukturen bis ca. 1000 nm Größe entsprechen. Die Messung wurde bei einer Temperatur von 150 °C durchgeführt. Die Struktur entspricht dichteren, u.U. auch teilkristallinen Domänen von Polymerketten. Bei q=0,06 1/Å (entspricht einer Längenskala von etwa 10 nm) ist noch ein breiter Peak zu erkennen, der mit steigender Temperatur ausgeprägter wird. Er geht auf den Kontrast zwischen Phosphorsäure und Polymer zurück. Es lassen sich durchgehende, kanalartige Bereiche erkennen, die mit Phosphorsäure belegt sind. Diese Bereiche sind wichtig dafür, dass der Strom die gesamte Dicke der Membran durchdringen kann, und damit wichtig für die Leitfähigkeit der Membran insgesamt. An der Position der Peaks auf der Wellenvektorachse lässt sich erkennen, dass diese Bereiche ca. 10 nm Ausdehnung haben.

Auch bei nominell identisch hergestellten ABPBI Membranen fanden sich je nach Produktionscharge im phosphorsäuredotierten Material (mit Neutronenkleinwinkelstreuung - SANS) sowie in der undotierten Membran (mit Röntgenkleinwinkelstreuung - SAXS) entweder Strukturen > 1 nm oder nicht, insbesondere mit fraktaler Dimension. Strukturen fanden sich bei denjenigen Membranen, die sich im Experiment als tauglich für den Einsatz in der Brennstoffzelle erwiesen haben. Bei denjenigen Membranen, die für diesen Einsatz untauglich waren, fehlten die fraktalen Strukturen.

Für kleine, gegen Null gehende Wellenvektoren Q steigt die Streuintensität an einem Massenfraktal entsprechend I(Q)∼Q^{-fdim} zu einem Maximum an. In der doppelt logarithmischen Auftragung in Figur 3 erscheint dieser Anstieg linear mit Steigung fdim. Dies weist darauf hin, dass Membran Domänen von Polymerketten aufweist, die selbstähnlich sind mit einer fraktalen Dimension fdim größer als 2. Die Vernetzung der Polymerdomänen hat somit einen räumlichen Anteil. Sie ist also kein Oberflächeneffekt, sondern durch die ganze Dicke der Membran hindurch fortgesetzt. Die vernetzten Domänen durchdringen die Membran irregulär in drei Dimensionen und sorgen so für die Stabilität der Membran.

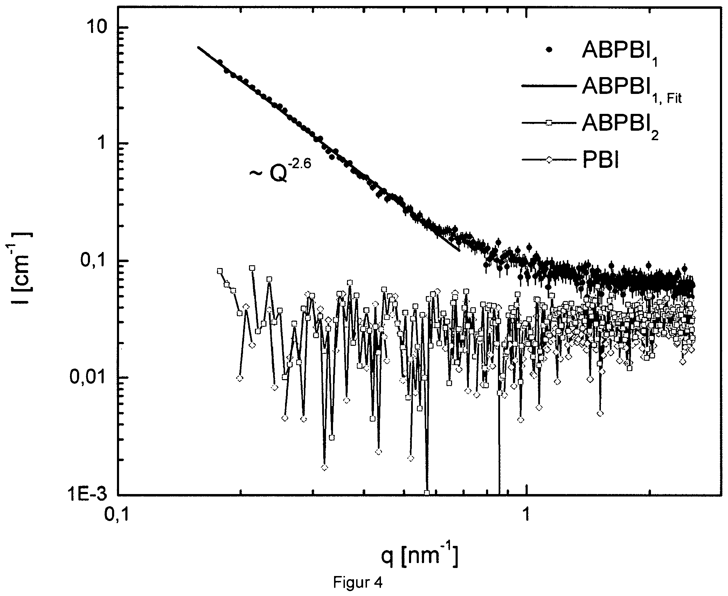

Figur 4 zeigt SAXS-Messungen an trockenen, d.h. noch nicht mit Phosphorsäure beladenen, PBI- und ABPMI-Membranen. Die Streuintensität I ist doppelt logarithmisch über dem Wellenvektor (Streuvektor) q aufgetragen. Die Streuintensität I ist im Interesse der Vergleichbarkeit von Messungen an verschieden dicken Proben auf die Probendicke normiert und daher in der Einheit cm⁻¹ angegeben.

Die mit ABPBI₁ bezeichnete Membran zeigt den für fraktale Strukturen charakteristischen Anstieg der Streuintensität für gegen Null gehende Wellenvektoren. In der doppelt logarithmischen Auftragung von Figur 4 erscheint dieser Anstieg linear mit Steigung 2.6, was der fraktalen Dimension des durch die Polymerdomänen gebildeten Massenfraktals entspricht.

## Patentansprüche

1. Verfahren zur Materialprüfung einer Polymermembran für den Einsatz als protonenleitende Membran in einer Brennstoffzelle,
**dadurch gekennzeichnet, dass**
die Membran auf das Vorhandensein von selbstähnlichen Domänen von Polymerketten untersucht und als tauglich für den Einsatz in der Brennstoffzelle gewertet wird, wenn derartige Domänen vorhanden sind und die Membran mit Neutronen- oder Röntgenstrahlung bestrahlt und die Intensität I (Q) der gestreuten Strahlung als Funktion des Wellenvektors Q gemessen wird, wobei die Intensität der gestreuten Strahlung mindestens für einen Wellenvektor zwischen 1 nm⁻¹ (0,1 Å⁻¹) und 1,5 nm⁻¹ (0,15 Å⁻¹) sowie mindestens für einen weiteren Wellenvektor unterhalb dieses Bereiches gemessen wird.

2. Verfahren nach Anspruch 1,
**dadurch gekennzeichnet, dass**
die Membran auf das Vorhandensein fraktaler Domänen von Polymerketten untersucht und als tauglich für den Einsatz in der Brennstoffzelle gewertet wird, wenn derartige Domänen vorhanden sind.

3. Verfahren nach Anspruch 2,
**dadurch gekennzeichnet, dass**
die fraktale Dimension fdim der Domänen bestimmt wird und die Membran als tauglich für den Einsatz in der Brennstoffzelle gewertet wird, wenn fdim zwischen 2 und 3 liegt.

4. Verfahren nach einem der Ansprüche 1 bis 3,
**dadurch gekennzeichnet, dass**
die Membran auf das Vorhandensein von Domänen von Polymerketten untersucht wird, die in mindestens einer Dimension eine laterale Ausdehnung zwischen 1 nm und 2000 nm aufweisen, und dass sie bei Vorhandensein dieser Domänen als tauglich für den Einsatz in der Brennstoffzelle gewertet wird.

5. Verfahren nach Anspruch 4,
**dadurch gekennzeichnet, dass**
die Membran auf das Vorhandensein von Domänen von Polymerketten untersucht wird, die in mindestens einer Dimension eine laterale Ausdehnung zwischen 1 nm und 50 nm aufweisen, und dass sie bei Vorhandensein dieser Domänen als tauglich für den Einsatz in der Brennstoffzelle gewertet wird.

6. Verfahren nach einem der Ansprüche 1 bis 5,
**dadurch gekennzeichnet, dass**
die Membran mit Transmissionselektronenmikroskopie oder Rastersondenmikroskopie untersucht und aus den erhaltenen Bildern ausgewertet wird, ob die Domänen vorhanden sind.

7. Verfahren nach einem der vorherigen Ansprüche,
**dadurch gekennzeichnet, dass**
Neutronen- oder Röntgenstrahlung mit einer Wellenlänge zwischen 0.1 und 2 nm (1 und 20 Å) gewählt wird.

8. Verfahren nach einem der vorherigen Ansprüche,
**dadurch gekennzeichnet, dass**
die Membran als tauglich für den Einsatz in der Brennstoffzelle gewertet wird, wenn sich die beiden gemessenen Intensitäten um mindestens einen Faktor 5 und/oder mindestens um einen Faktor 5 pro 0,5 nm⁻¹ (0.05 Å⁻¹) Differenz zwischen den beiden Wellenvektoren unterscheiden.

9. Verfahren nach einem der vorherigen Ansprüche,
**dadurch gekennzeichnet, dass**
die Intensität der unter einem Winkel von bis zu θ=15 Grad gestreuten Strahlung gemessen wird.

## Claims

1. Method for material testing a polymer membrane for use as a protein-conducting membrane in a fuel cell,
**characterised in that**
the membrane is examined for the presence of self-similar domains of polymer chains and is assessed as fit for use in the fuel cell, if domains of this type are present, and the membrane is irradiated with neutron radiation or X-rays and the intensity I (Q) of the scattered radiation is measured as a function of the wave vector Q, in which the intensity of the scattered radiation is measured at least for a wave vector of between 0.01 nm⁻¹ (0.1 Ǻ⁻¹) and 0.015 nm⁻¹ (0.15 Ǻ⁻¹) as well as at least for a further wave vector below this range.

2. Method according to claim 1,
**characterised in that**
the membrane is examined for the presence of fractal domains of polymer chains and is assessed as fit for use in the fuel cell, if domains of this type are present.

3. Method according to claim 2,
**characterised in that**
the fractal dimension fdim of the domains is determined and the membrane is assessed as fit for use in the fuel cell, if fdim is between 2 and 3.

4. Method according to one of claims 1 to 3,
**characterised in that**
the membrane is examined for the presence of domains of polymer chains, which in at least one dimension have a lateral expansion of between 1 nm and 2000 nm, and it is assessed as fit for use in the fuel cell, if these domains are present.

5. Method according to claim 4,
**characterised in that**
the membrane is examined for the presence of domains of polymer chains, which in at least one dimension have a lateral expansion of between 1 nm and 50 nm, and it is assessed as fit for use in the fuel cell, if these domains are present.

6. Method according to one of claims 1 to 5,
**characterised in that**
the membrane is examined with transmission electron microscopy or scanning probe microscopy and it is assessed whether the domains are present from the pictures obtained.

7. Method according to one of the previous claims,
**characterised in that**
neutron radiation or X-rays with a wavelength of between 0.1 and 2 nm (1 and 20 Ǻ) are selected.

8. Method according to one of the previous claims,
**characterised in that**
the membrane is assessed as fit for use in the fuel cell, if both intensities measured differ from each other by at least a factor of 5 and/or a least by a factor of 5 per 0.005 nm⁻¹ (0.05 Ǻ⁻¹) difference between both wave vectors.

9. Method according to one of the previous claims,
**characterised in that**
the intensity of the scattered radiation is measured at an angle of up to θ=15 degrees.

## Revendications

1. Procédé pour l'essai de matériaux d'une membrane polymère pour l'utilisation en tant que membrane conductrice de protons dans une pile à combustible,
**caractérisé en ce que**
la membrane est analysée quant à la présence de domaines autosimilaires de chaînes polymères et est évaluée comme étant apte à l'utilisation dans la pile à combustible lorsque de tels domaines sont présents, et la membrane est irradiée par rayonnement neutronique ou X et l'intensité I (Q) du rayonnement diffusé est mesurée en tant que fonction du vecteur d'onde Q, dans lequel l'intensité du rayonnement diffusé est mesurée au moins pour un vecteur d'onde compris entre 1 nm⁻¹ (0,1 Å-1) et 1,5 nm⁻¹ (0,15 Å⁻¹) ainsi qu'au moins pour un autre vecteur d'onde inférieur à cette plage.

2. Procédé selon la revendication 1,
**caractérisé en ce que**
la membrane est analysée quant à la présence de domaines fractals de chaînes polymères et est évaluée comme étant apte à l'utilisation dans la pile à combustible lorsque de tels domaines sont présents.

3. Procédé selon la revendication 2,
**caractérisé en ce que**
la dimension fractale fdim des domaines est déterminée et **en ce que** la membrane est évaluée comme étant apte à l'utilisation dans la pile à combustible lorsque fdim est compris entre 2 et 3.

4. Procédé selon l'une des revendications 1 à 3,
**caractérisé en ce que**
la membrane est analysée quant à la présence de domaines de chaînes polymères qui présentent, dans au moins une dimension, une extension latérale entre 1 nm et 2000 nm, et **en ce qu'**en cas de présence de ces domaines, elle est évaluée comme étant apte à l'utilisation dans la pile à combustible.

5. Procédé selon la revendication 4,
**caractérisé en ce que**
la membrane est analysée quant à la présence de domaines de chaînes polymères qui présentent, dans au moins une dimension, une extension latérale entre 1 nm et 50 nm et **en ce qu'**en cas de présence de ces domaines, elle est évaluée comme étant apte à l'utilisation dans la pile à combustible.

6. Procédé selon l'une des revendications 1 à 5,
**caractérisé en ce que**
la membrane est analysée par microscopie électronique en transmission ou microscopie à sonde à balayage et **en ce qu'**à partir des images obtenues, on évalue si les domaines sont présents.

7. Procédé selon l'une des revendications précédentes,
**caractérisé en ce que**
un rayonnement neutronique ou X est sélectionné avec une longueur d'onde comprise entre 0,1 et 2 nm (1 et 20 Å).

8. Procédé selon l'une des revendications précédentes,
**caractérisé en ce que**
la membrane est évaluée comme étant apte à l'utilisation dans la pile à combustible lorsque les deux intensités mesurées diffèrent au moins d'un facteur 5 et/ou au moins d'un facteur 5 par 0,5 nm-1 (0,05 Å⁻¹) de différence entre les deux vecteurs d'onde.

9. Procédé selon l'une des revendications précédentes,
**caractérisé en ce que**
l'intensité du rayonnement diffusé est mesurée selon un angle allant jusqu'à θ=15 degrés.
